# EUROPEAN PATENT APPLICATION

(11) **EP 2 657 569 A1**
(43) Date of publication of application: **30.10.2013**
(21) Application number: 11850657.5
(22) Date of filing: 08.11.2011
(51) Int. Cl.: F16H 1/32

(54) **GEAR TRANSMISSION DEVICE**

(30) Priority: 22.12.2010 JP 2010286148
(71) Applicant: Nabtesco Corporation, Tokyo 102-0093 (JP)
(72) Inventor: NAKAMURA Koji, Tsu-shi Mie 514-8533 (JP)
(74) Representative: Winter, Brandl, Fürniss, Hübner, Röss, Kaiser, Polte - Partnerschaft
(86) International application number: PCT/JP2011/075718
(87) International publication number: WO 2012/086327

(57) **Abstract**

A gear transmission is provided with an internal gear, an external gear, and a crankshaft. The external gear rotates eccentrically relative to the internal gear while meshing with the internal gear. The crankshaft has an eccentric member which engages with a through hole formed in the external gear. The crankshaft causes the external gear to rotate eccentrically. A ball bearing is disposed between an inner periphery of the through hole and an outer periphery of the eccentric member. A first recess corresponding to an outer race of the ball bearing is formed on the inner periphery of the through hole, and a second recess corresponding to an inner race of the ball bearing is formed on the outer periphery of the eccentric member.

## Description

### Technical Field

The present application claims priority to Japanese Patent Application No. 2010-286148, filed on December 22, 2010, the contents of which are hereby incorporated by reference into the present application. The present application relates to a gear transmission. In particular, the present application relates to a gear transmission in which an external gear rotates eccentrically relative to an internal gear while meshing with the internal gear.

### Background Art

A gear transmission in which an external gear rotates eccentrically relative to an internal gear while meshing with the internal gear is known. In the case of a type where the external gear rotates eccentrically, the external gear rotates eccentrically around an axis of the internal gear. A number of teeth of the external gear differs from a number of teeth of the internal gear. Consequently, when the external gear rotates eccentrically while meshing with the internal gear, the external gear rotates relative to the internal gear in accordance with the difference in the numbers of teeth of the external gear and the internal gear. An example of this type of gear transmission is disclosed in Japanese Patent Application Publication No. H05-180278. In the following description, Japanese Patent Application Publicatoin No. H05-180278 is called Patent Document 1. As disclosed in Patent Document 1, the gear transmission includes a crankshaft for causing the external gear to rotate eccentrically. The crankshaft has an eccentric member. The eccentric member engages with a through hole formed in the external gear. When the crankshaft rotates, the eccentric member rotates eccentrically around the axis of the crankshaft. Consequently, the external gear engaged with the eccentric member rotates eccentrically while meshing with the internal gear.

A type of gear transmission in which an internal gear rotates eccentrically is disclosed in Japanese Patent Application Publication No. 2004-293640. In the following description, Japanese Patent Application Publication No. 2004-293640 is called Patent Document 2. In this type of gear transmission, an eccentric member of a crankshaft engages with a through hole formed in the internal gear. Both the type in which the external gear rotates eccentrically and the type in which the internal gear rotates eccentrically have the points in common of a through hole being formed in a gear that rotates eccentrically, and an eccentric member engaging with the through hole. Below, the type of gear transmission in which the external gear rotates eccentrically will primarily be described. However, it should be noted that the technique disclosed in the present specification is also applicable to the type of gear transmission in which the internal gear rotates eccentrically.

As shown in Patent Documents 1 and 2, a needle bearing is disposed between the eccentric member and the through hole of the external gear (or the internal gear) in order to reduce friction between the two. The needle bearing comprises a plurality of cylindrical rolling elements. A periphery of the cylindrical rolling element makes contact with both an outer periphery of the eccentric member and an inner periphery of the through hole. As shown clearly in Fig. 1 of Patent Document 1, components 122, 123 are disposed adjacent to a needle bearing (rolling element) 120 in the axial direction thereof. The components 122, 123 are washer-like components that prevent the needle bearing 120 from moving in the axial direction. In the following description, for the sake of convenience, the components 122, 123 are called washers. Similar washers are also disposed in Patent Document 2.

### Summary of Invention

In the gear transmissions of Patent Documents 1 and 2, the needle bearing is prevented from moving in the axial direction by the rolling element of the needle bearing making contact with the washer. Alternatively, the needle bearing is prevented from moving in the axial direction by a retainer making contact with the washer, this retainer holding the rolling element. When the crankshaft rotates, the rolling element moves along the circumferential direction of the eccentric member while rolling along the outer periphery of the eccentric member. At this juncture, friction occurs between the rolling element (or retainer) and the washer, and contacting parts of the rolling element (or retainer) and the washer generate heat. There is a risk that such heat may damage the gear transmission. The present specification provides a technique for suppressing the heating of a bearing disposed between the eccentric member and the gear that rotates eccentrically.

A gear transmission disclosed in the present specification comprises an internal gear, an external gear, and a crankshaft. The external gear rotates eccentrically relative to the internal gear while meshing with the internal gear. A through hole is formed in one gear that is the internal gear or the external gear. The crankshaft has an eccentric member. The eccentric member engages with the through hole formed in the gear that is the internal gear or the external gear. The eccentric member causes the one of the internal gear or the external gear to rotate eccentrically. In a case where the external gear rotates eccentrically, the through hole is formed in the external gear, and the eccentric member of the crankshaft engages with the through hole of the external gear. A ball bearing is disposed between an inner periphery of the through hole and an outer periphery of the eccentric member. A first recess corresponding to an outer race of the ball bearing is formed on the inner periphery of the through hole. Further, a second recess corresponding to an inner race of the ball bearing is formed on the outer periphery of the eccentric member.

According to the aforementioned gear transmission, the first recess, the second recess, and a spherical rolling element (typically a ball) interposed between the first and second recesses form a ball bearing. In the case of the ball bearing, the movement of the rolling element in an axial direction is restricted by the outer race and the inner race. Consequently, in the case of the ball bearing, a component is not required for making contact with the rolling element and restricting the movement of the rolling element in the axial direction. Thereby, heating of the rolling element can be prevented. Moreover, in the case of the ball bearing, a mutual position of the inner race and the outer race in the axial direction does not readily change. Consequently, with the type where the external gear rotates eccentrically, movement of the external gear in the axial direction can also be regulated. A regulating component for regulating the movement of the external gear in the axial direction can also be omitted. Consequently, the generation of heat between the external gear and the regulating component can also be prevented.

In the gear transmission disclosed in the present specification, two or more gears are provided on the one gear that is the internal gear or the external gear, and a diameter of the rolling element (ball) may be smaller than a thickness of the one gear that is the internal gear or the external gear. Moreover, this "one gear that is the internal gear or the external gear" is the gear engaging with the eccentric member. Specifically, in the case of the type where the external gear rotates eccentrically, two or more external gears are provided, and the diameter of the rolling element may be smaller than the thickness of the external gear. In a case of the type where the internal gear rotates eccentrically, two or more internal gears are provided, and the diameter of the rolling element may be smaller than the thickness of the internal gear.

As described above, in the gear transmission disclosed in the present specification, in the case of the type where the external gear rotates eccentrically, the movement of the external gear in the axial direction can also be regulated. Further, if the diameter of the rolling element is smaller than the thickness of the external gear, two or more external gears can be disposed in close proximity. A length of the gear transmission in the axial direction can be reduced.

The technique disclosed in the present specification can provide a gear transmission in which heating is suppressed of a bearing disposed between an eccentric member and a gear that rotates eccentrically.

### Brief Description of Drawings

Fig. 1 shows a cross-sectional view of a gear transmission of the embodiment.
Fig. 2 shows an enlarged cross-sectional view of a portion 30 surrounded by the broken line of Fig. 1.
Fig. 3 shows an enlarged cross-sectional view of a portion of a conventional gear transmission.

### Description of Embodiments

Before describing the embodiment, technical features of the embodiment will be noted briefly.
(Feature 1) A gear transmission includes a carrier supported rotatably by a case. A crankshaft is supported rotatably on the carrier by a bearing which regulates movement of the crankshaft in an axial direction.
(Feature 2) A cross-sectional shape of both a first recess and a second recess is a circular arc.

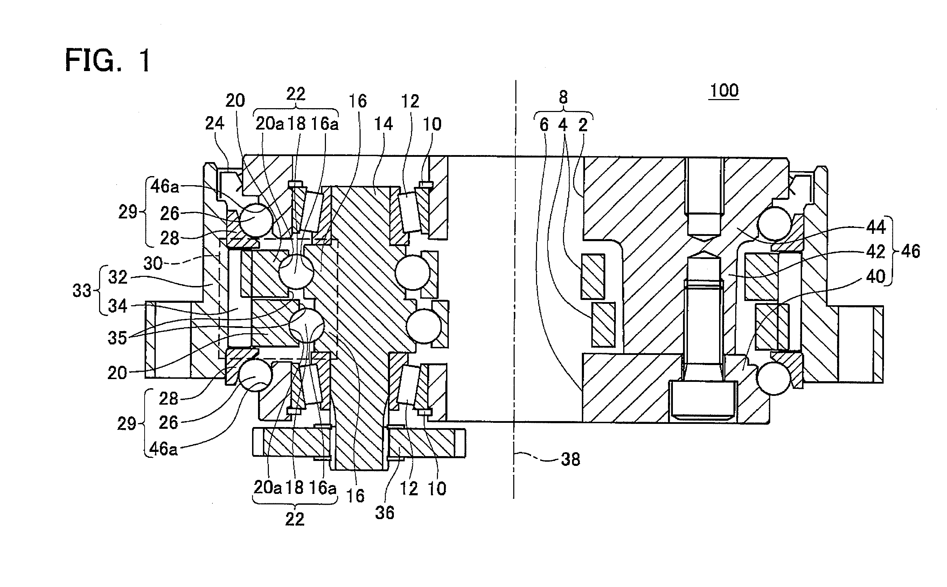

In the embodiment, a type of gear transmission (reduction gear) in which an external gear rotates eccentrically is described. However, it should be noted that the technique disclosed in the present specification is also applicable to a type of gear transmission in which an internal gear rotates eccentrically. Fig. 1 shows a cross-sectional view of a gear transmission 100. For clarity in the figures, hatching to represent a cross-section has been omitted for part of the components. The gear transmission 100 is an eccentric oscillating type in which an external gear 20 rotates eccentrically while meshing with an internal gear 33. Moreover, the internal gear 33 is configured of a case 32 and a plurality of inner pins 34. Grooves, these being parallel in the axial direction, are formed on an inner periphery of the case 32 at equal intervals in a circumferential direction. The inner pins 34 fit into these grooves. The inner pins 34 may fit into all these grooves, or the inner pins 34 may not fit into some of these grooves.

First, the basic structure of the gear transmission 100 will be described. The gear transmission 100 comprises the internal gear 33, a carrier 46, the external gear 20 and a crankshaft 14. The carrier 46 is supported on the case 32 by a pair of angular ball bearings 29. Movement of the carrier 46 in an axial direction and a radial direction relative to the case 32 is regulated by the pair of angular ball bearings 29. The carrier 46 is configured of a first plate 44 and a second plate 40. A columnar part 42 extends from the first plate 44 toward the second plate 40, and the second plate 40 is fixed to the columnar part 42. The crankshaft 14 is supported on the carrier 46 by a pair of tapered roller bearings 12. Movement of the crankshaft 14 in a direction of an axis 38 is regulated by the pair of tapered roller bearings 12. More specifically, the movement of the crankshaft 14 in the axial direction and the radial direction relative to the carrier 46 is regulated by the pair of tapered roller bearings 12.

The crankshaft 14 extends parallel to the axis 38 at a position offset from the axis 38 of the gear transmission 100. The crankshaft 14 comprises an input gear 36 and two eccentric members 16. The input gear 36 is fixed to the crankshaft 14 at the outer side of the pair of tapered roller bearings 12. The two eccentric members 16 are fixed to the crankshaft 14 between the pair of tapered roller bearings 12. The gear transmission 100 comprises two external gears 20. A through hole 35 is formed in each of the external gears 20. The eccentric member 16 engages with the through hole 35 via ball bearings 22. The external gear 20 is supported on the carrier 46 via the crankshaft 14. Moreover, each ball bearing 22 is configured of an outer race 20a, an inner race 16a, a rolling element 18, and a retainer (not shown). Further details of the ball bearings 22 will be described later.

When torque of a motor (not shown) is transmitted to the input gear 36, the crankshaft 14 rotates. When the crankshaft 14 rotates, the eccentric member 16 rotates eccentrically. Accompanying the eccentric rotation of the eccentric member 16, the external gear 20 rotates eccentrically around the axis 38 while meshing with the internal gear 33. The number of teeth of the external gear 20 and the number of teeth of the internal gear 33 (the number of inner pins 34) differ. Consequently, when the external gear 20 rotates eccentrically, the external gear 20 rotates relative to the internal gear 33 in accordance with the difference in number of teeth of the external gear 20 and the internal gear 33. Consequently, the carrier 46 that is supporting the external gear 20 rotates relative to the internal gear 33 (the case 32). Moreover, an axis of the carrier 46 and the internal gear 33 is identical to the axis 38 of the gear transmission 100.

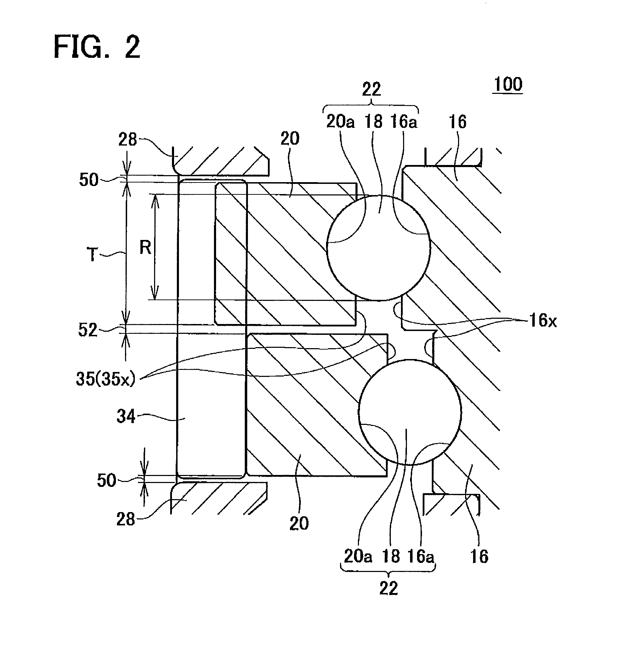

The configuration specific to the gear transmission 100 will be described with reference to Fig. 2. As shown in Fig. 2, first recesses 20a are formed in an inner periphery 35x of the through hole 35 of the external gear 20. Each first recess 20a has a circular arc shape, and forms a loop in the circumferential direction in the inner periphery 35x of the through hole 35. Further, second recesses 16a are formed in an outer periphery 16x of the eccentric member 16. Each second recess 16a has a circular arc shape, and forms a loop in the circumferential direction in the outer periphery 16x of the eccentric member 16. Each ball bearing 22 is formed from the first recess 20a, the second recess 16a and the spherical rolling element (ball) 18. The first recess 20a corresponds to an outer race of the ball bearing 22, and the second recess 16a corresponds to an inner race of the ball bearing 22.

The rolling elements 18 make contact with both the first recess 20a and the second recess 16a, and movement of the rolling elements 18 in the axial direction (the direction of the axis 38 of Fig. 1) is regulated by the recesses 20a, 16a. Regulation of the movement of the rolling elements 18 in the axial direction means that the relative position of the first recess 20a and the second recess 16a does not readily change in the axial direction. As described above, the movement of the crankshaft 14 in the direction of the axis 38 is regulated by the pair of tapered roller bearings 12 (see Fig. 1). Since relative change of positions of the first recesses 20a and the second recesses 16a in the axial direction is regulated, movement of the external gears 20 in the axial direction is regulated. Moreover, in the figure, the curvature of the rolling elements 18 appears the same as the curvature of the first recess 20a and the second recess 16a. However, the curvature of the rolling elements 18 is actually slightly larger than the curvature of the first recess 20a and the second recess 16a. That is, the first recess 20a and the second recess 16a have a slightly more gradual curved surface than the rolling elements 18. Consequently, the rolling elements 18 make point contact with the first recess 20a and the second recess 16a.

The gear transmission 100 comprises the two external gears 20 that are aligned in the axial direction. A clearance 52 is provided between the external gears 20. Further, a clearance 50 is provided between each external gear 20 and an outer race 28 of the corresponding angular ball bearing 29. As described above, movement of the external gears 20 in the axial direction is regulated. Consequently, an end surface, in the axial direction, of each external gear 20 does not make contact with any component.

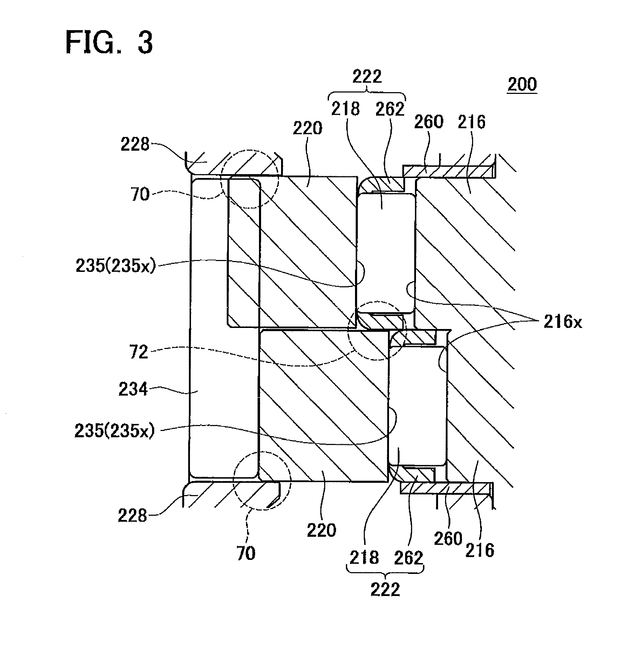

Here, a typical conventional gear transmission 200 will be described with reference to Fig. 3. Fig. 3 shows a part of the gear transmission 200, this corresponding to a portion 30 of the gear transmission 100. In the gear transmission 200, an eccentric member 216 engages with a through hole 235 of each external gear 220 via a needle bearings 222. A periphery of rolling elements (rollers) 218 of each needle bearing 222 make linear contact with an inner periphery 235x of the through hole 235 and with an outer periphery 216x of the eccentric member 216. A washer 260 is provided at both ends, in the axial direction, of the eccentric member 216. A retainer 262 of each needle bearing 222 makes contact with the corresponding washer 260. The retainer 262 also makes contact with one end surface, in the axial direction, of the corresponding external gear 220. Movement of the needle bearings 222 in the axial direction is regulated by the washers 260 and the external gears 220. Further, an outer race 228 makes contact with the other end surface, in the axial direction, of each external gear 220. Movement of the external gears 220 in the axial direction is regulated by the retainers 262 and the outer races 228.

Advantages of the gear transmission 100 will be described in comparison with the conventional gear transmission 200. As described above, in the gear transmission 200, each needle bearing 222 (the retainer 262) is caused to make contact with the washer 260 and the external gear 220 in order to regulate movement of the needle bearing 222 in the axial direction. Consequently, when the gear transmission 200 is being driven, friction occurs between the needle bearing 222 and the washer 260. Alternatively, friction occurs between the needle bearing 222 and the external gear 220. Frictional heat is generated, adversely affecting the gear transmission 200. There is the risk that the frictional heat will damage the gear transmission 200. By contrast, in the gear transmission 100, it is not necessary to use components such as washers, etc. to regulate the movement in the axial direction of the ball bearings 22 (the rolling elements 18). Since heating of the ball bearings 22 is suppressed, durability of the gear transmission 100 is greater than that of the gear transmission 200. Further, the number of components of the gear transmission 100 can be reduced compared to the gear transmission 200.

As described above, in the gear transmission 200, the rolling elements 218 make linear contact with the inner periphery 235x of the through hole 235 and the outer periphery 216x of the eccentric member 216. By contrast, in the gear transmission 100, the rolling elements 18 make point contact with the first recesses 20a and the second recesses 16a. In the gear transmission 100, the contact areas between the rolling elements and another component is smaller than in the gear transmission 200. Consequently, in the gear transmission 100, the rolling loss of the rolling elements is smaller than in the gear transmission 200, and the rolling elements themselves have a structure that does not readily generate heat. Further, in the gear transmission 200, the retainers 262 are caused to make contact with the washers 260. Consequently, lubricant sealed within the gear transmission 200 does not readily reach the surroundings of the rolling elements 218. In the gear transmission 100, the lubricant readily reaches the surroundings of the rolling elements 18, allowing friction of the rolling elements 18 to be further reduced.

In the gear transmission 200, the amount of eccentricity (amount of deviation from the axis of the crankshaft) of the eccentric member 216 can be adjusted only in the range where the washers 260 and the retainers 262 make contact. By contrast, in the gear transmission 100, the amount of eccentricity of the eccentric member 16 can be adjusted freely.

In the gear transmission 200, the end surfaces of the external gears 220, in the axial direction, are caused to make contact with the outer races 228 and the retainers 262 (broken line 70 portions and broken line 72 portion) in order to regulate movement of the external gears 220 in the axial direction. Consequently, frictional heat is generated between the external gears 220 and the outer races 228 (broken line 70 portions), and/or between the external gears 220 and the retainers 262 (broken line 72 portion). Further, the external gears 220 are abraded by the friction. By contrast, in the gear transmission 100, movement of the external gears 20 in the axial direction is regulated by the ball bearings 22. While the gear transmission 100 is being driven, contact between the external gears 20, or between each external gear 20 and another component, is suppressed. The clearances 50 and 52 (see Fig. 2) can be maintained, and the generation of frictional heat between the external gears 20, or between each external gear 20 and another component, can be suppressed. Further, abrasion of the external geard 20 caused by friction can also be suppressed.

As described above, in the gear transmission 200, the outer races 228 and the retainers 218 are caused to make contact with the end surfaces, in the axial direction, of the external gears 20 in order to regulate movement of the external gears 20 in the axial direction. Consequently, in order to reduce friction, processing is required to flatten contact surfaces of the outer races 228 and a surface of each external gear 20 (the end surface in the axial direction). Similarly, processing is required to flatten contact surfaces of the retainers 218 and surfaces of the external gears 20. By contrast, in the gear transmission 100, contact does not occur between the surfaces of the external gears 20 and other components, and consequently flat processing (finishing) can be omitted.

Other features of the gear transmission 100 will be described. A diameter R of the rolling elements 18 is smaller than a thickness T of the external gears 20. According to this type of configuration, the rolling elements 18 do not make contact with the surfaces of the external gears 20 (the end surfaces in the axial direction). Consequently, the external gears 20 can be disposed in close proximity in the direction of the axis 38. In other words, the clearance 52 between the external gears 20 can be reduced. Thereby, a length of the gear transmission 100 in the direction of the axis 38 can be reduced.

As shown in Fig. 1, a first through hole 2 coaxial with the axis 38 is formed in the first plate 44, and a second through hole 6 coaxial with the axis 38 is formed in the second plate 40. Further, a central through hole 4 is formed in a central part of each external gear 20. A through hole 8 of the gear transmission 100 is formed by the through holes 2, 4, 6. The through hole 8 passes through the gear transmission 100 in the direction of the axis 38. Cable, piping, etc can be passed through the through hole 8.

An oil seal 24 is disposed in a loop around the axis 38 between the first plate 44 and the case 32. The oil seal 24 prevents lubricant (oil or grease) within the gear transmission 100 from leaking to the exterior of the gear transmission 100. Each angular ball bearing 29 is formed from a third recess 46a formed on the carrier 46, rolling elements (balls) 26, the outer race 28, and a retainer (not shown). The third recess 46a corresponds to an inner race of the angular ball bearing 29. By having the third recess 46a also serve as the inner race of the angular ball bearing 29, the components constituting the main bearing (angular ball bearing) 29 of the gear transmission 100 can be reduced.

In the above embodiment, the crankshaft 14 extends parallel to the axis 38 at a position offset from the axis 38 of the gear transmission 100. However, the crankshaft may extend over the axis of the gear transmission (the axis of the carrier and the internal gear). In this case, a first recess is formed in the inner periphery of a central through hole formed in a central portion of an external gear. A ball bearing is configured by the first recess, the second recess formed on the eccentric member, and the rolling element (ball).

Specific examples of the present invention has been described in detail, however, these are mere exemplary indications and thus do not limit the scope of the claims. The art described in the claims include modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. A gear transmission comprising:
an internal gear;
an external gear configured to eccentrically rotate relative to the internal gear while meshing with the internal gear; and
a crankshaft having an eccentric member which engages with a through hole formed in one gear that is the internal gear or the external gear, and configured to cause the one gear to rotate eccentrically,
wherein a ball bearing is disposed between an inner periphery of the through hole and an outer periphery of the eccentric member, a first recess corresponding to an outer race of the ball bearing is formed on the inner periphery of the through hole, and a second recess corresponding to an inner race of the ball bearing is formed on the outer periphery of the eccentric member.

2. The gear transmission according to claim 1, further comprising a plurality of the one gear,
wherein a diameter of each of rolling elements of the ball bearing is smaller than a thickness of each of the one gears.

3. The gear transmission according to claim 1 or 2, wherein
a shape of a cross-section along the first recess and the second recess is a circular arc.

4. The gear transmission according to any one of claims 1 to 3, wherein
a curvature of rolling elements of the ball bearing is larger than both of a curvature of the first recess and a curvature of the second recess.
